(19) Europäisches Patentamt / European Patent Office / Office européen des brevets

(11) EP 3 767 298 B1

(12) EUROPEAN PATENT SPECIFICATION

(45) Date of publication and mention
of the grant of the patent:
**12.04.2023 Bulletin 2023/15**

(21) Application number: **19187329.8**

(22) Date of filing: **19.07.2019**

(51) International Patent Classification (IPC):
**G01N 35/00** (2006.01)

(52) Cooperative Patent Classification (CPC):
**G01N 35/00613; G01N 35/00712; G01N 35/00871;**
G01N 2035/0091

(54) **COMPUTER-IMPLEMENTED METHOD, DEVICE, COMPUTER-READABLE STORAGE MEDIUM AND TEST SYSTEM FOR PERFORMING VALIDATION OF A TEST RESULT FROM AN ANALYZING INSTRUMENT**

COMPUTERIMPLEMENTIERTES VERFAHREN, VORRICHTUNG, COMPUTERLESBARES SPEICHERMEDIUM UND TESTSYSTEM ZUR DURCHFÜHRUNG EINER VALIDIERUNG EINES TESTERGEBNISSES AUS EINEM ANALYSEINSTRUMENT

PROCÉDÉ MIS EN ŒUVRE PAR ORDINATEUR, DISPOSITIF, SUPPORT D'ENREGISTREMENT LISIBLE PAR ORDINATEUR ET SYSTÈME DE TEST POUR LA RÉALISATION DE LA VALIDATION D'UN RÉSULTAT DE TEST D'UN INSTRUMENT D'ANALYSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.01.2021 Bulletin 2021/03**

(73) Proprietor: **SYSMEX CORPORATION**
**Kobe-shi**
**Hyogo 651-0073 (JP)**

(72) Inventors:
• **Bauer, Gabi**
**Hyogo 651-0073 (JP)**
• **Wienefoet, Claudia**
**Hyogo 651-0073 (JP)**
• **Stark, Jana**
**Hyogo 651-0073 (JP)**

(74) Representative: **Hoffmann Eitle**
**Patent- und Rechtsanwälte PartmbB**
**Arabellastraße 30**
**81925 München (DE)**

(56) References cited:
**EP-A1- 3 153 841        EP-A1- 3 422 014**
**EP-A2- 1 953 526        US-A1- 2014 039 670**
**US-A1- 2016 356 801**

## Description

[Technical Field]

The present invention relates to a computer-implemented method and a device for performing validation of a test result from an analyzing instrument. The present invention also relates to a computer-readable storage medium comprising a computer program adapted to perform the method and a test system.

[Background]

A system for performing an automatic validation of test results is known from EP 2 118 794 B1. In the system, a sample collected from a patient is analyzed by an automatic analyzer in a laboratory, the obtained test results are transmitted from the automatic analyzer to a computer, and the computer determines whether the test results meet predetermined criteria established by the laboratory. Test results that meet the predetermined criteria are approved and released in a physician-accessible information system, and on the other hand, test results that fail automatic validation are further investigated by laboratory technicians.

Furthermore, EP 3 422 014 A1 describes a laboratory system comprising a plurality of laboratories, wherein each laboratory comprises one or more analytical instruments for performing a plurality of analytical tests of biological samples and providing analytical test results and a remote computer communicatively connected to the laboratories via a communication network. Each of the laboratories is configured to define test result validation criteria for validating at least one of the analytical test results associated with the respective analytical tests of one of the plurality of laboratories. The remote computer is configured to define a plurality of profiles of validation criteria, each profile comprising a plurality of the test result validation criteria, a predetermined grouping of the plurality of analytical tests and a validation group flag indicating a group of analytical test results to be validated. The remote computer is configured to perform an automatic validation of groups of the analytical test results according to the profiles of validation criteria by means of setting the validation group flag to the groups of analytical test results to be validated and validating the groups of analytical test results onto which the validation group flag is set based on the test result validation criteria.

EP 3 153 841 A1 describes a sample analyzer preparing a measurement sample from a blood sample or a body fluid sample which differs from the blood sample.

If samples are body fluids collected from a body cavity, it is required to be able to report accurate test results promptly to a physician in the examination of body fluid because the examination is used for diagnosis of infection/inflamation or differentiation of tumor/malignancy and is highly urgent (especially cerebrospinal fluid (CSF)).

There are many types of body fluids such as cerebrospinal fluid (CSF), ascitic fluid, pleural fluid, synovial fluid and continuous ambulatory peritoneal dialysis (CAPD) fluid. When the validation rules differ depending on each type of body fluid, the responsible laboratory technician must be well trained in order to correctly interpret the result.

In view of the above, it is an object of the present invention to quickly and reliably validate test results relating to body fluids.

[Summary of the invention]

To achieve or at least partially achieve the above-mentioned object, methods according to the invention are defined in the independent claim. Particular embodiments are defined in the dependent claims, and are explained in the present description.

A computer-implemented method for performing a validation of a test result from an analyzing instrument is provided. The method comprises receiving information related to a collection source of a body fluid sample collected from a body cavity. It is determined, based on the received information, whether the body fluid sample corresponds to a first group including at least one specific type of body fluid, or a second group including at least a plurality of types of body fluids other than the specific type of body fluid. A test result of the body fluid sample is obtained from the analyzing instrument. The obtained test result is validated based on a first validation rule when the body fluid sample corresponds to the first group, and validated the obtained test result based on a second validation rule different from the first validation rule when the body fluid sample corresponds to the second group.

Thereby, the validation process can be simplified and performed more efficiently. Especially, the grouping of the validation rules reduces the number of validation rules which leads to a more efficient validation. In addition, the burden on the operator in understanding multiple validation rules is reduced.

[Brief description of the drawings]

The embodiments herein will now be further described in more detail in the following detailed description by reference to the appended drawings illustrating the embodiments and in which:

Fig. 1 is a perspective view showing the external structure of an analyzer of the embodiment of the present invention.

Fig. 2 is a top view showing the internal structure of the body of the embodiment of the analyzer of the present invention.

Fig. 3A is a block diagram showing the structure of an embodiment of the operation and display device of the analyzer of the present invention.

Fig. 3B is a block diagram showing the structure of an embodiment of WAM of the present invention.

Fig. 3C is a block diagram showing the structure of an alternative embodiment of the operation and display device of the analyzer of the present invention.

FIG. 4 is a schematic view showing the main structure of an optical type measuring device according to the embodiment of the present invention.

Fig. 5 shows a schematic layout of the workflow for analyzing a sample according to the present invention.

Fig. 6 and 7 show a more detailed method according to one embodiment of the present invention.

Fig. 8 shows an example of the execution of the validation rules according to an embodiment of the present invention.

Fig. 9A shows an example of a WBC scattergram.

Fig. 9B shows an example of an abnormal WBC scattergram.

Fig. 10 shows a display screen for validating a test result according to an embodiment of the present invention.

Fig. 11 shows the possible values for a macroscopic examination of a body fluid sample according to an embodiment of the present invention.

Fig. 12A shows a selection screen where the operator can add or modify the collection source of the sample.

Fig. 12B shows a screen for selecting macroscopic examination results according to an embodiment of the present invention.

Fig. 12C shows a selection screen where the operator can add or modify the collection source of the sample.

Fig. 13 shows possible formats of the test results to be reported to LIS according to an embodiment of the present invention.

[Detailed description]

The present invention shall now be described in conjunction with specific embodiments. The specific embodiments serve to provide the skilled person with a better understanding, but are not intended to in any way restrict the scope of the invention, which is defined by appended claims. In particular, the embodiments described independently throughout the description can be combined to form further embodiments to the extent that they are not mutually exclusive.

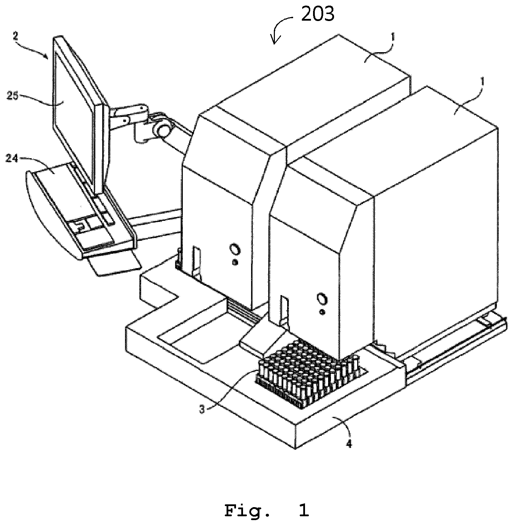

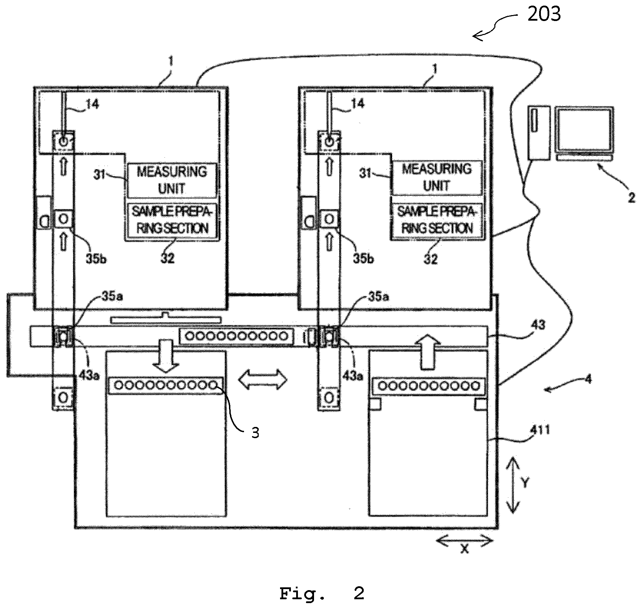

FIG. 1 is a perspective view showing the external structure of the analyzer 203, and FIG. 2 is a top view showing the internal structure of the analyzer 203. The analyzer body 1 is configured for measuring clinical samples such as blood contained in a collection tube 3, and is provided with a sample transport section 4 for transporting the collection tube 3 to a predetermined position at which the analyzer body 1 obtains the sample. The analyzer body 1 is also configured for measuring body fluids other than the blood and urine. The body fluid is contained in a test tube with or without a cap and the test tube is manually provided to the analyzer body 1. The analyzer 203 includes two analyzer bodies 1, each having the same structure. Although two analyzer bodies 1 are shown in Fig. 1, there can be one or more analyzer bodies. The analyzer body 1 includes the sample preparing section 32 and a measuring unit 31.
The document refers to the analysis and validation of results of body fluid samples obtained from a body cavity of a subject (such as a patient) other than blood or urine. In particular these are for example cerebrospinal fluid (CSF), pleural fluid, ascitic fluid, synovial fluid and continuous ambulatory dialysis fluids (CAPD).

Body fluid samples are usually analyzed in manual mode, not via the sample transport section 4. Due to the very low cell volume, the analyzer 203 performs a background check prior to measuring the body fluid.

The aspirating tube (aspirator) 14 aspirates the sample within the collection tube 3, which is transported to an aspiration position. A sample rack holding multiple collection tubes 3 is set by a user on a rack placement section 411 and is transported into a transport path 43. The transport path 43 transports the sample rack to a grasping position 35a for grasping a collection tube 3 by a catcher 43a. When measuring a body fluid sample, a test tube containing the body fluid is manually set by a user to the grasping position 35a. The tube containing a sample is moved by the catcher 43a into a tube holder 35b, and the tube is transported by the tube holder 35b to the aspiration position. The sample preparing section 32 prepares measurement samples for various analyzes by mixing a predetermined amount of fluid aspirated from the tube with reagent.

The sample preparing section 32 prepares a WBC measurement sample for classifying white blood cells into sub-groups by mixing a sample, a white blood cell classifying hemolytic agent and a white blood cell classifying stain. In addition, the sample preparing section 32 prepares a RBC measurement sample for detecting and counting red blood cells by mixing a sample, a hemolysing reagent and a dilution liquid.

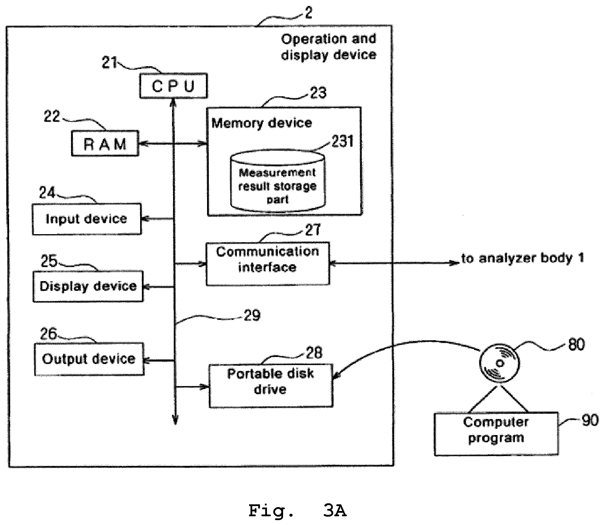

FIG. 3A is a block diagram showing the structure of an embodiment of the operation and display device 2 of the analyzer 203. As shown in FIG. 3A, the operation and display device 2 is configured by a CPU (central processing unit) 21, RAM 22, memory device 23, input device 24, display device 25, output device 26, communication interface 27, portable disk drive 28, and an internal bus 29 connecting all the above-mentioned hardware. The CPU 21 is connected to the various hardware of the operation and display device 2 mentioned above via the internal bus 29, and controls these various hardware components and performs various software functions according to a computer program 90 stored on the memory device 23. The RAM 22 is configured by a volatile memory such as an SRAM, SDRAM or the like, and is used for developing modules during the execution of the computer program 90, and for temporarily storing data generated during the execution of the computer program 90. It is noted that the operation and display device 2 may also be constituted by a plurality of interconnected devices having a plurality of interconnected CPUs, a plurality of interconnected memory devices, and the like.

The memory device 23 may be configured by a built-in fixed type memory device (hard disk), volatile memory such as an SRAM, or nonvolatile memory such as a ROM. The computer program 90 stored on the memory device 23 may be downloaded from a portable memory medium 80 such as a DVD, CD-ROM or the like which stores information such as programs and data via the portable disk drive 28, and developed from the memory device 23 to the RAM 22 during execution. Of course, the computer program 90 may also be downloaded from an external computer connected via the communication interface 27.

The memory device 23 is provided with a measurement result storage part 231 for storing measurement results.

The communication interface 27 is connected to the internal bus 29, and is capable of sending and receiving data via a communication line connected to the analyzer body 1. That is, instruction information to start a measurement can be sent to the analyzer body 1 and measurement data such as measurement results and the like can be received.

The input device 24 is a data input medium such as a keyboard and mouse or the like. The display device 25 is a CRT monitor, LCD or similar display device for graphically displaying analysis results. The output device 26 is a printing device such as a laser printer, inkjet printer or the like.

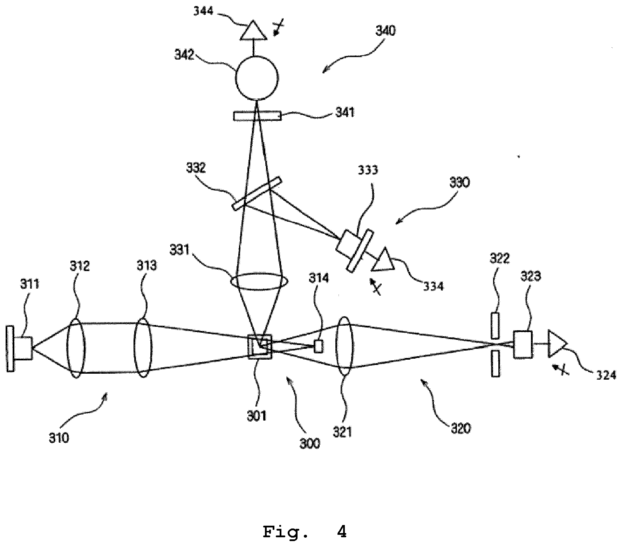

FIG. 4 is a schematic view showing the structure of an optical type measuring device within the measuring unit 31. The measuring device 300 receives the measurement sample at a flow cell 301, a flow is formed in the flow cell 301, the cells contained in the flow passing within the flow cell 301 are irradiated by a semiconductor laser light, and the cells are measured. The measuring device 300 has a beam spot system 310, forward scattered light receiving system 320, side scattered light receiving system 330, and side fluorescent light receiving system 340.

The measuring device 300 forms a flow in which the cells contained in the measurement sample are aligned in a single row/line within the flow cell 301, thus improving the accuracy and reproducibility of the cell count. The beam spot system 310 is configured so that light emitted from the semiconductor laser 311 passes through a collimator lens 312 and condenser lens 313, and irradiates the flow cell 301. The beam spot system 310 is also provided with a beam stopper 314.

The forward scattered light receiving system 320 is configured so that the forward scattered light is collected by a forward collector lens 321, and the light passing through a pinhole 322 is received by a forward scattered light receiver (photodiode) 323, and the signal output from the forward scattered light receiver 323 according to the amount of received light is amplified by an amplifier 324. The amplification factor of the amplifier 324 is set by the CPU 21.

The side scattered light receiving system 330 is configured so that the side scattered light is collected by a side scattered light collector lens 331, and part of the light is reflected by a dichroic mirror 332, received by a side scattered light receiver (photodiode) 333, and the signal output from the side scattered light receiver 333 according to the amount of received light is amplified by an amplifier 334. The amplification factor of the amplifier 334 is set by the CPU 21.

The scattered light is a phenomenon which occurs due to the change in the direction of travel of the light caused by the presence of an obstacle in the direction in which the light is traveling, that is, a particle, such as a blood cell. Information relating to the size and material quality of the particle can be obtained by detecting the scattered light. Particularly information relating to the size of the particle (cell) can be obtained from the forward scattered light. Information relating to the interior of the particle, such as information concerning the material quality of the particle, can be obtained from the side scattered light.

The side fluorescent light receiving system 340 is configured so that the light passing through the dichroic mirror 332 then passes through a spectral filter 341 and is received by a fluorescent light receiver (photomultiplier) 342, and the signal output from the fluorescent light receiver 342 according to the amount of received light is amplified by an amplifier 344. The amplification factor of the amplifier 344 is set by the CPU 21.

When a fluorescent material such as a stained cell is irradiated with light, the fluorescent material generates light that has a longer wavelength than the irradiating light. The fluorescent intensity becomes stronger under heavy staining, so that information relating to the degree of staining of the cell can be obtained by measuring the intensity of the fluorescent light. Other measurements such as the classification of the blood cell can be performed via the differences in the side fluorescent light intensity.

When light is received by the light receivers 323, 333, and 342, the light receivers 323, 333, and 342 output electrical pulse signals, and measurement data are generated based on the output electrical pulse signals. The measurement data are transmitted from the analyzer body 1 to the operation and display device 2, and undergo processing and analysis in the operation and display device 2.

In addition, there is also an impedance detector for RBC in the measuring unit 31.

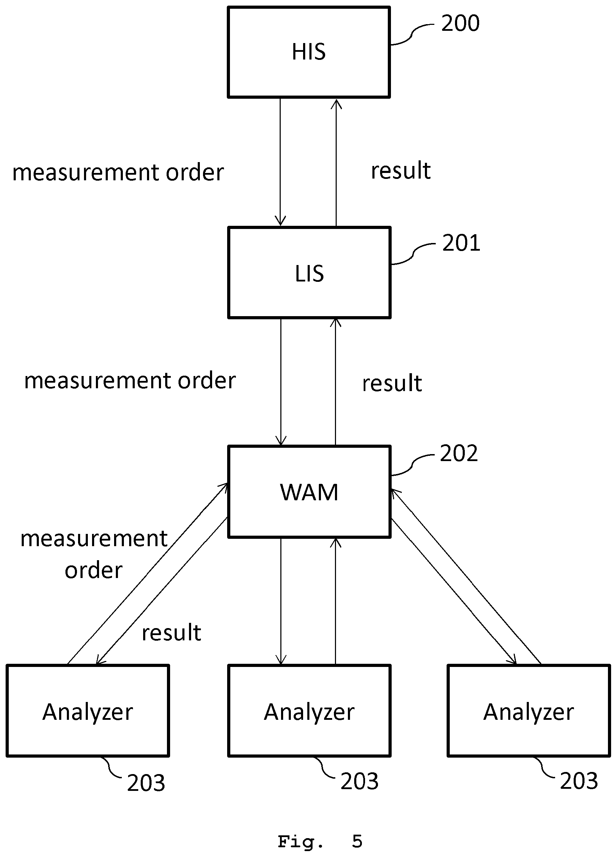

Fig. 5 shows a schematic layout of the workflow for analyzing a sample.

An HIS (Hospital Information System) 200 serves above all to collect the personal patient data, the hospital data (e.g. medical history), the documentation and the planning of medical and nursing care, i.e. the care planning and care documentation as well as the physicians' reports and physicians' letters. The provision of tests or treatment by the physician as well as the administration and documentation of the results of tests are also important tasks of the HIS 200. For this purpose, the HIS 200 is associated with a plurality of other systems.

One important function of the HIS 200 is to administer tests requested by the physician (X-ray examinations, MRI, blood tests, body fluid tests, urine tests, etc.) and to refer them to the appropriate points within the hospital/laboratory which carry out these tests. In the case, for example, of a body fluid test, the physician collects a body fluid sample from a body cavity of a subject (such as a patient) and the body fluid sample is placed in a test tube. The body fluids can be cerebrospinal fluid (CSF), pleural fluid, ascitic fluid, Pericardial Fluid, synovial fluid or continuous ambulatory peritoneal dialysis (CAPD) fluid. The body fluid can be any other types of fluids which can be collected from any body cavity of the subject and can also be BALF (broncho-alveolar lavage fluids). In general, body fluids can be taken from more than 70 cavities of the human body. The test tube is provided with a barcode. The physician scans the barcode and is then able to select the required analysis parameters (e.g. complete/restricted blood count, concentration of individual blood cells) using a HIS input mask at his workstation. The physician finalises the measurement order in which the analysis parameters are summarised and arranges for the test tube to be conveyed to the laboratory. The measurement order contains for example a patient ID and information on the test that are to be performed on the collected sample. The physician also inputs information on a collection source of the body fluid sample. The collection source indicates from which part of a plurality of body cavities of the subject the body fluid sample was collected.

The (hospital) laboratory is equipped with its own computer system - the Laboratory Information System (LIS) 201. The LIS software is typically independent of the HIS 200 and is generally also marketed by a different manufacturer. For this reason, HIS 200 and LIS 201 communicate by means of standardised protocols such as HL7 and ASTM. It is noted that the LIS 201 does not have to be connected to a HIS 200. The measurement order could be received from another computer system or even on paper and then entered manually in the LIS 201.

The laboratory normally has a plurality of different departments which are responsible for different analysis, such as e.g. immunology, clinical chemistry, haematology, coagulation and genetics. The LIS 201 administers and organises the measurement orders passed to it by the HIS 200. In particular, the LIS 201 assigns the analysis parameters included in an order to the corresponding departments and gives the instruction to carry out the individual analysis. Furthermore, the LIS 201 is responsible for receiving and passing on the individual analysis results from the departments.

If the measurement order relates to a body fluid measurement, the measurement order is forwarded to a work area manager (WAM) 202. The WAM 202 instructs a particular analyzer 203 to perform the measurement orders of the body fluid measurement. The test results are then sent from the analyzer 203 to the WAM 202.

After the test results for the body fluid measurement have been validated by the WAM 202 and manually verified by the operator, the WAM 202 sends the test results to the LIS 201. The LIS 201 then forwards the test results (potentially together with results from other departments in the lab) to the HIS 200.

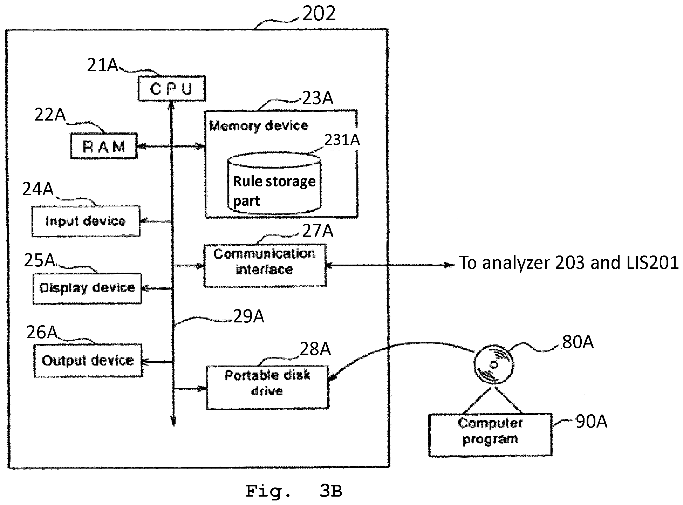

FIG. 3B is a block diagram showing the structure of an embodiment of the WAM 202 of the present invention. The WAM 202 is configured by a CPU (central processing unit) 21A, RAM 22A, memory device 23A, input device 24A, display device 25A, output device 26A, communication interface 27A, portable disk drive 28A, and an internal bus 29A connecting all the above-mentioned hardware. The computer program 90A stored on the memory device 23A may be downloaded from a portable memory medium 80A or downloaded from an external computer connected via the communication interface 27A.

The memory device 23A is provided with a rule storage part 231A for storing predefined rules for validating the measurement results obtained by the analyzer 203. The CPU 21A determines the reliability of the measurement results based on the stored predefined rules.

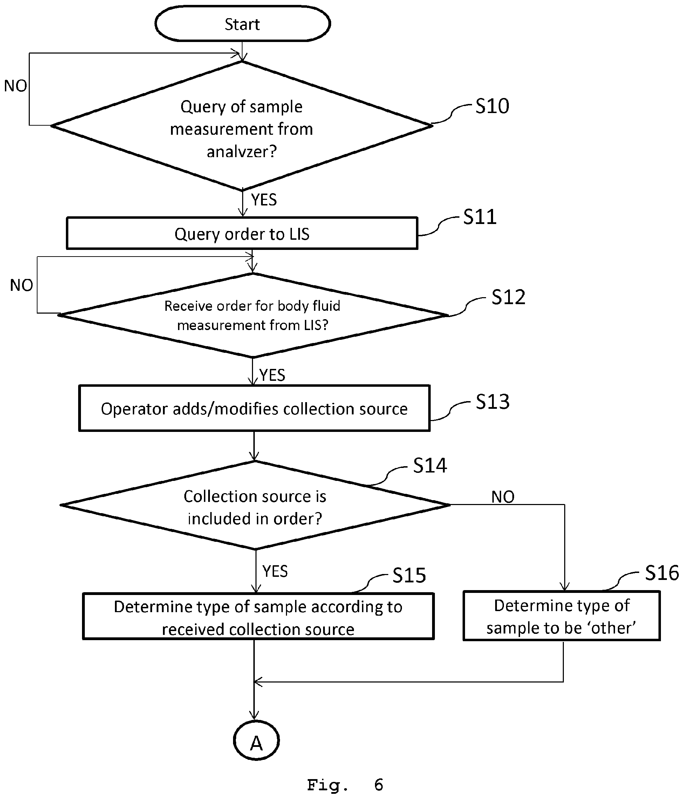

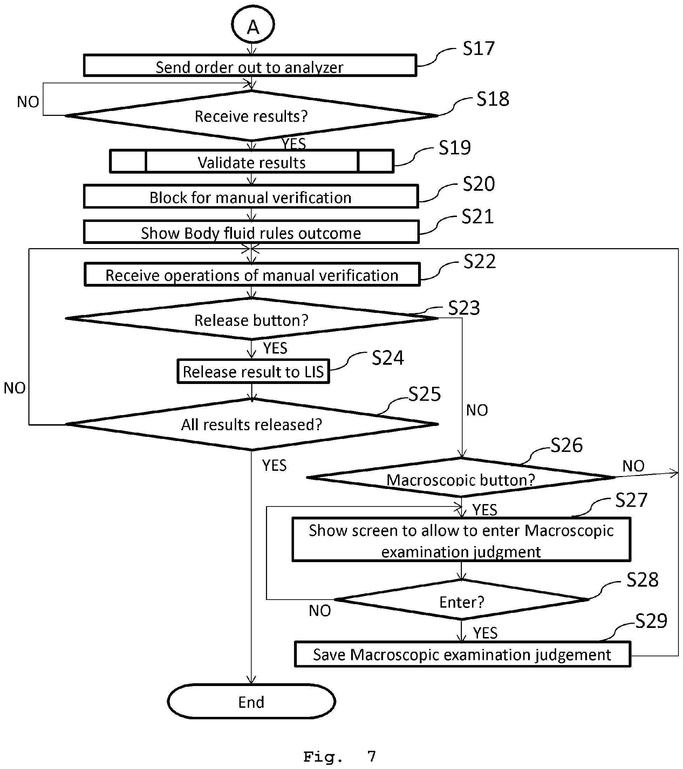

Fig. 6 and 7 shows a method according to one embodiment of the present invention. The method may be performed by the WAM 202 shown in Fig. 5.

In step S10, the WAM 202 receives a query of a sample measurement from the analyzer 203. When a measurement of body fluid sample is performed, typically, the laboratory technician manually inserts the test tube containing the body fluid sample into the analyzer 203. The analyzer 203 reads the barcode attached to the test tube and queries of the WAM 202 for a measurement order relating to the sample.

When the WAM 202 receives the query from the analyzer 203, the WAM 202 sends a query to LIS 201 (step S11). In response to the query, the WAM 202 judges whether the measurement order corresponding to the sample is received from LIS 203 (step S12). Specifically, in the step S12, the WAM 202 judges whether a measurement order for body fluid measurement is received. The received measurement order for the body fluid measurement may contain information related to the collection source of the sample.

It should be noted that steps S10-S12 describes a so-called query mode in which the WAM 202 queries LIS 201 each time a sample is scanned by an analyzer 203. Alternatively, the WAM 202 may download the measurement orders from LIS 201 on a regular basis or LIS 201 may push a measurement order once the measurement order arrives at LIS 201.

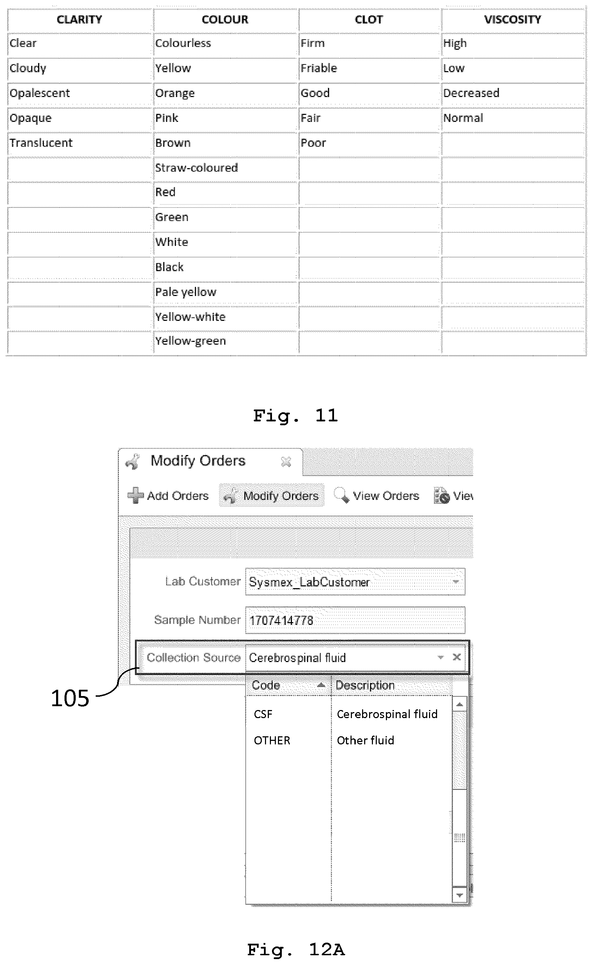

The operator (laboratory technician) can add or modify the collection source of the sample in step S13. If for example the collection source is missing in the measurement order, the operator may manually input the collection source by referring to information shown on the test tube or other documentation on paper. As shown in Fig. 12A, the WAM 202 shows a selection screen where the operator can add or modify the collection source 105 of the sample to "CSF" or "OTHER". In step S14, the WAM 202 judges whether a collection source is included in the measurement order. If a collection source is included in the measurement order, the WAM 202 determines the type of the sample in accordance with the receive collection source (step S15). If no collection source is included in the measurement order, the WAM 202 determines the type of the sample to be 'other fluid' (step S16). Thus, the 'other fluid' is a default setting and the validation can be performed even when the collection source is missing in the measurement order.

In step S17, the WAM 202 sends a measurement order to an analyzer 203. Then, if the WAM 202 receives measurement results from the analyzer 203 (step S18), the WAM 202 runs the body fluid rules for validating the measurement results (step S19).

The measurement result may contain at least one of the following parameters (see also EP 1 953 527 A2)

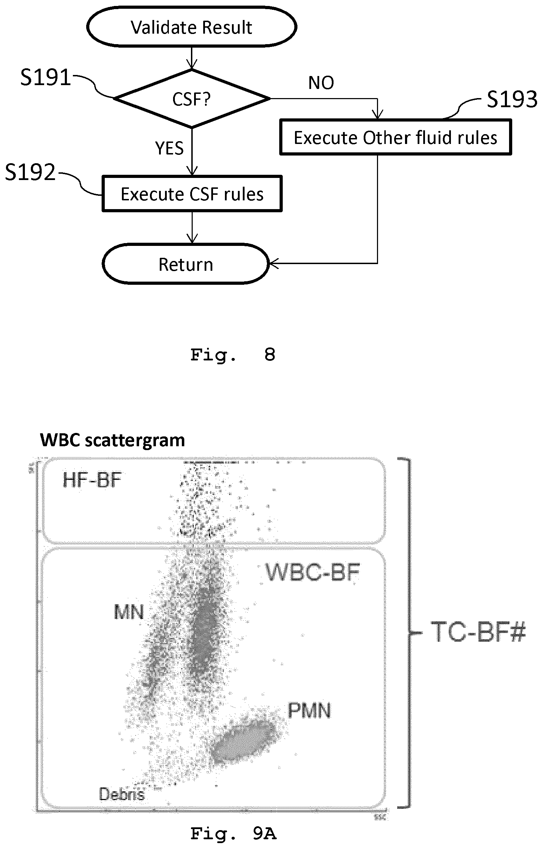

- WBC-BF (white blood cell count of body fluid) e.g. in units of 1/pL
- RBC-BF (red blood cell count of body fluid) e.g. in units of 1/pL
- TC-BF (total nucleated cell count of body fluid) e.g. in units of 1/pL; TC-BF# includes: WBC-BF plus HF-BF described below, including high fluorescent cells such as macrophages, erythrophages, tumour cells, mesothelial cells and plasma cells.
- MN (mononuclear cells count) e.g. in units of 1/pL and/or %
- PMN (polymorphonuclear cells count) e.g. in units of 1/pL and/or %
- HF-BF (high fluorescence cell count of body fluid) e.g. in units of 1/pL and/or %; see Fig. 9A: The count in the area with a stronger fluorescence signal than the WBC-BF area of WBC scattergram
- NE-BF (neutrophil cells count) e.g. in units of $1/\mu L$ and/or %
- LY-BF (lymphocyte cells count) e.g. in units of $1/\mu L$ and/or %
- MO-BF (monocyte cells count) e.g. in units of $1/\mu L$ and/or %
- EO-BF (eosinophil cells count) e.g. in units of $1/\mu L$ and/or %

Fig. 8 shows an example of the execution of the validation rules for validating the measurement results. In step S191, the WAM 202 determines whether the sample corresponds to CSF or a group including a plurality of body fluids other than the CSF based on the determination made in steps S15 or S16.

If the sample corresponds to CSF, the WAM 202 executes CSF rules in step S192. In one embodiment, the CSF rules include the following two conditions:

- WBC scattergram is abnormal, and
- HF-BF count $\geq 5/\mu L$.

The WBC scattergram is defined with the horizontal axis representing the side scattered light intensity (SSC) and the vertical axis representing the side fluorescence light intensity (SFL). An example of a WBC scattergram is shown in Fig. 9A.

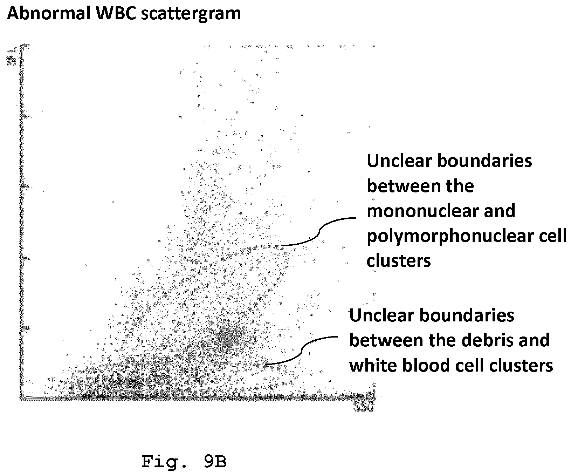

As shown in Fig. 9B, when a cluster of white blood cells and a cluster of debris is overlapping or a cluster of mononuclear cells and a cluster of polymorphonuclear cells is overlapping in the WBC scattergram, abnormality of the WBC scattergram is judged.

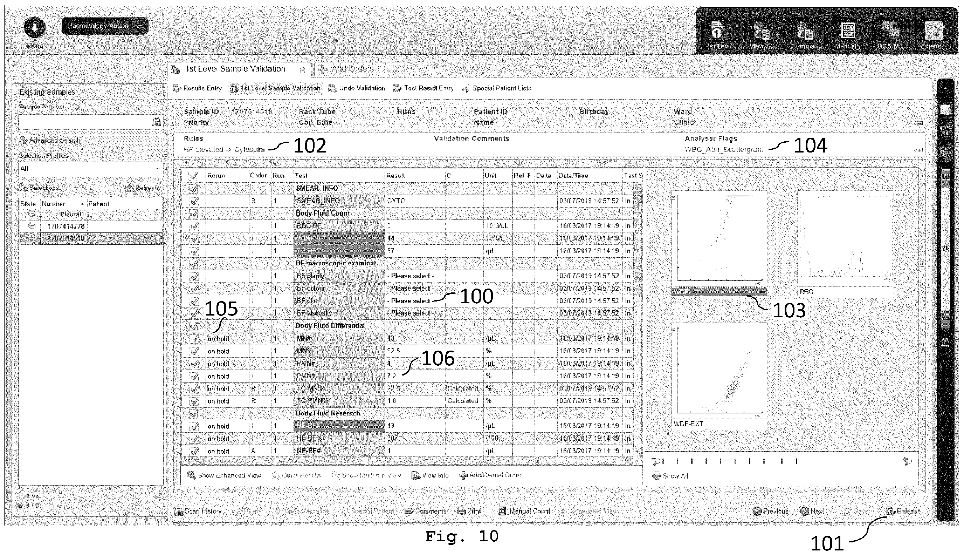

If at least one of the two conditions is violated, the test result is marked as violating the corresponding condition. For example, if the HF-BF count is above 5/pL, the test results is marked as "HF elevated" and is possibly displayed with a comment (e.g. HF elevated -> cytospin, cf. reference sign 102 in Fig. 10). If the WBC scattergram is abnormal, the test result is marked as "scattergram abnormal" and is possibly displayed with an indication (e.g. WBC_Abn_Scattergram, cf. reference sign 104 in Fig. 10) or an indication "Cell count? -> Check count in chamber/cytospin".

If the sample does not correspond to CSF, the WAM 202 executes rules corresponding to other fluids in step S193. In one embodiment, the rules corresponding to other fluids include the following two conditions:

- WBC scattergram is abnormal, and
- HF-BF count $\geq$ 100/pL.

In one embodiment, both the CSF rules and the rules corresponding to other fluids can also contain the conditions:

- RBC-BF $\geq 1.0 \times 10^3/\mu$L, and
- Abnormal RBC distribution R-MFV (RBC-most frequent volume) < 45 fL.

In another embodiment, before step S191, the WAM 202 applies an additional rule to check if the results are within analyzer specification in regard to linearity.

Once the validation procedure is terminated, the results are blocked for manual verification (step S20). This means that results are not automatically transmitted to LIS 201 but the results have to be manually released by the operator. To this end, the WAM 202 stores the results in the memory device 23A.

In step S21, the measurement results including the result of the validation are displayed to the operator.

Fig. 10 shows a display screen for manually verifying a test result by the operator. In this screen, test result of a sample corresponding to CSF are displayed. The parameters marked with '#' relate to absolute values while the parameters marked with '%' relate to relative values.

The total cell count TC-BF# serves as reference for the relative cell count for the TC values (typically calculated in WAM 202):

$$\text{TC-PMN \% = (PMN\# / TC-BF\#) x 100}$$

$$\text{TC-MN \% = (MN\# / TC-BF\#) x 100}$$

$$\text{TC-EO \% = (EO-BF\# / TC-BF\#) x 100}$$

$$\text{TC-NE \% = (NE-BF\# / TC-BF\#) x 100}$$

$$\text{TC-LY \% = (LY-BF\# / TC-BF\#) x 100}$$

$$\text{TC-MO \% = (MO-BF\# / TC-BF\#) x 100}$$

$$\text{TC-HF \% = (HF-BF\# / TC-BF\#) x 100}$$

Similarly, the white blood cell count serves as reference for the relative cell count for the other values (typically already existing on the analyzer 203):

$$PMN\ \% = (PMN\# \ / \ WBC\text{-}BF\#) \ x \ 100$$

$$MN\ \% = (MN\# \ / \ WBC\ \text{-}BF\#) \ x \ 100$$

$$EO\ \% = (EO\text{-}BF\# \ / \ WBC\ \text{-}BF\#) \ x \ 100$$

$$NE\ \% = (NE\text{-}BF\# \ / \ WBC\ \text{-}BF\#) \ x \ 100$$

$$LY\ \% = (LY\text{-}BF\# \ / \ WBC\ \text{-}BF\#) \ x \ 100$$

$$MO\ \% = (MO\text{-}BF\# \ / \ WBC\ \text{-}BF\#) \ x \ 100$$

$$HF\ \% = (HF\text{-}BF\# \ / \ WBC\ \text{-}BF\#) \ x \ 100$$

All or part of the relative values may be calculated in the WAM 202. Alternatively, all or part of the relative values can be included in the measurement report received from the analyzer 203.

In this example, the HF-BF value is 43/pL and thus violates the CSF rules. Therefore, the HF-BF value is highlighted in the screen and the WAM 202 indicates 'HF elevated-> Cytospin', see reference sign 102. Thereby, the WAM 202 suggests performing a cytospin in order to confirm the test result.

In addition, the WBC scattergram is abnormal in this example. Therefore, the WBC scattergram is highlighted, see reference sign 103 and an analyzer flag 'WBC_Abn_Scattergram' is displayed, see reference sign 104. In Fig. 10, "WDF" is indicated and highlighted under the WBC scattergram since the WBC scattergram is generated in "WDF channel" (WBC differential channel).

In general, the WAM 202 suggests performing a chamber count in case of suspicious counts and performing a cytospin in case of abnormal differential or increased HF-BF count.

In step S22, the WAM 202 receives operations of manual verification by the operator on the screen of Fig. 10. In this example, the HF-BF value is 43/pL and thus violates the CSF rules. The body fluid differential parameters such as HF-BF#, HF-BF%, NE-BF# etc. are indicated with "On hold", see reference sign 105. Furthermore, since the WBC scattergram is abnormal in this example, the results such as MN#, MN%, PMN#, PMN%, etc. related to the count based on the WBC scattergram are indicated with "On hold". These results with the indication "On hold" requires operator's manual verification by conducting a manual method such as cytospin and/or chamber count to confirm a reliability of the results. The numerical value of the results (see reference sign 106) can be modified by the operator by clicking the area on which the numerical value is shown. A window for counting the cells can be shown on the screen by the click (a dedicated menu "Manual Count" for counting or cytospin review can be opened). If the manual verification by the operator is completed, the operator can remove the indication "On hold" by clicking the area of the indication "On hold". The indication "On hold" can be automatically removed when the operator releases the manual or analyzer result.

In step S23, the WAM 202 may now receive an operation of a release button 101 from the operator.

In step S24, the results, except results with the indication "On hold", are released to LIS 201, if the release button is operated. The results with the indication "On hold" are not released to LIS 201 and are still waiting the manual verification by the operator.

In step S25, the WAM 202 judges whether all test results are released. If all test results are manually verified and all test results are released to LIS 201, the WAM 202 ends the procedure. If at least one of the test results is not released to LIS 201, the WAM 202 returns to step S22.

If the release button is not operated in step S23, as shown in step S26, the WAM 202 may receive, from the operator, an operation of a macroscopic button for entering a result of a macroscopic examination. If the macroscopic button is not operated (No in step S26), the process returns to step S22.

In step S27, in response to operation of the macroscopic button, the WAM 202 shows a screen to allow the operator to enter the result of the macroscopic examination. When the operator enters the result of the macroscopic examination (YES in step S28), the WAM 202 saves the result of the macroscopic examination in the test results and returns to step S22 (step S29).

In the example shown in Fig. 10, the operator can enter the result of the microscopic examination by clicking on the item 100 marked "-Please select-" (macroscopic button). The operator can enter the clarity, color, clot and viscosity of the body fluid. Fig. 11 shows the possible values for those parameters.

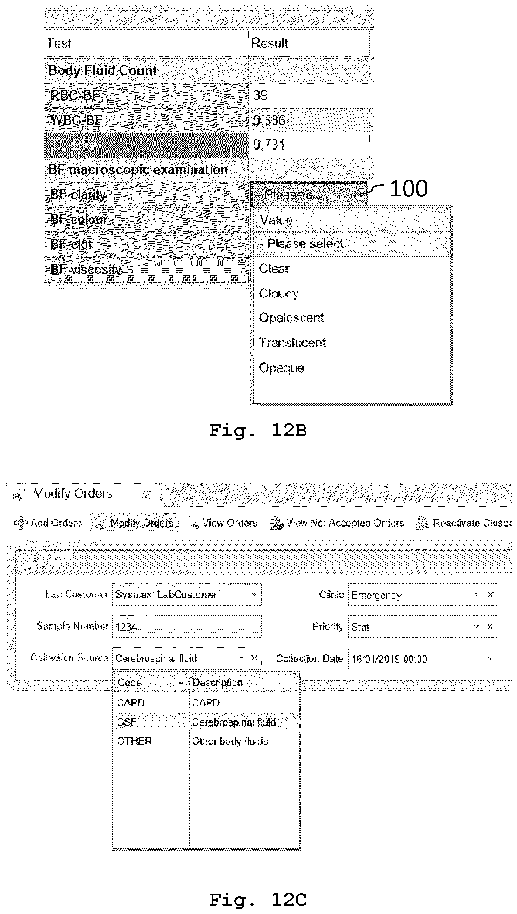

Fig. 12B shows a screen for selecting macroscopic examination results according to an embodiment of the present invention. In this case, the operator clicked in the item relating the clarity of the sample and can choose between 'clear', 'cloudy', 'opalescent', and 'translucent' and 'opaque'.

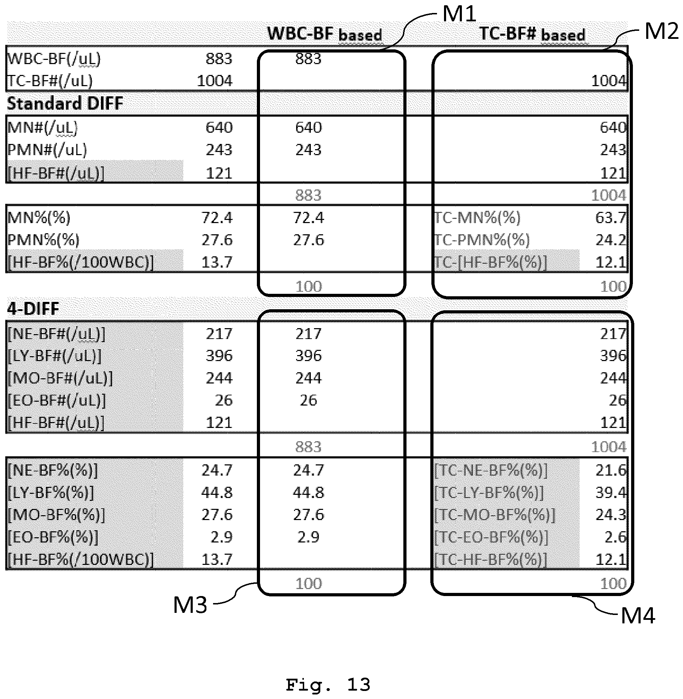

For releasing the test results to LIS 201 in steps S23 and S24, there are multiple possibilities. Fig. 13 shows possible formats of the test results to be reported to LIS 201. More specifically, Fig. 13 shows 4 different sets of parameter sets M1, M2, M3, M4 to be reported to the LIS 201. All sets also include HF-BF#. The parameters with grey background are used for research purposes.

In parameter set M1, the relative values are calculated based on WBC-BF. Parameter set M1 contains the parameters relating to a standard body fluid differential (WBC-BF, TC-BF#, MN#, PMN#, MN%, PMN%) and HF-BF (HF-BF# and/or HF-BF%).

In parameter set M2, the relative values are calculated based on TC-BF#. Parameter set M2 contains the parameters relating to a standard body fluid differential (WBC-BF, TC-BF#, MN#, PMN#, TC-MN%, TC-PMN%) and HF-BF (HF-BF# and/or TC-HF-BF%).

In parameter set M3, the relative values are calculated based on WBC-BF. Parameter set M3 contains the parameters relating to a 4-DIFF, i.e. four different differential count (NE-BF#, LY-BF#, MO-BF#, EO-BF#, NE-BF%, LY-BF%, MO-BF%, EO-BF%) and HF-BF (HF-BF# and/or HF-BF%).

In parameter set M4, the relative values are calculated based on TC-BF#. Parameter set M4 contains the parameters relating to a 4-DIFF (NE-BF#, LY-BF#, MO-BF#, EO-BF#, TC-NE-BF%, TC-LY-BF%, TC-MO-BF%, TC-EO-BF%) and HF-BF (HF-BF# and/or TC-HF-BF%).

By releasing parameter set M4 to LIS 201, relevant research parameters can be reported.

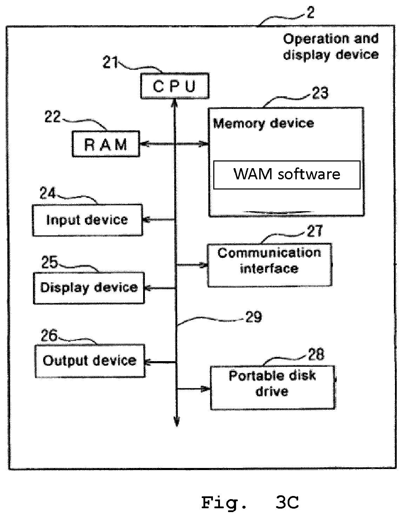

In the above described embodiment, the validation of the test results obtained by the analyzer 203 is performed by WAM 202 which is provided physically separated from the computer of the analyzer 203 (the operation and display device 2). However, a function of the WAM 202 for performing the validation of the test results may be embodied by one of the operation and display devices 2 comprised in the analyzers 203. As shown in Fig. 3C, the operation and display device 2 of one analyzer 203 may be equipped with a software for performing the function of the WAM 202.

Furthermore, it should be noted that the execution of the validation rules in Fig. 8 can be generalized. Specifically, the WAM 202 may determine whether the body fluid sample corresponds to a first group including at least one specific type of body fluid (e.g. CSF), or a second group including at least a plurality of types of body fluids other than the specific type of body fluid. The groups are defined by at least one common property. For example, the first group may include body fluid samples typically having a small number of cells or a small amount of fluid. The second group may include body fluid samples typically containing a larger number of cells or a larger amount of fluid compared to the fluid(s) comprised in the first group.

In addition, there may be more than two groups. For example, a third group may be defined by body fluids that are not produced by the human body but are introduced into the human body and then removed. One example of such a fluid is CAPD which is a specific solution introduced through a permanent catheter in the lower abdomen and then removed. The analysis of this type of body fluids may require specific rules for validation. Fig. 12C shows a selection screen where the operator can add or modify the collection source of the sample also to CAPD in analogy to the selection screen of Fig. 12A.

In the case of analyzing the CAPD fluid, the WAM 202 may apply the following conditions in addition to the rules corresponding to other fluids:

- WBC-BF $\geq$ 100/$\mu$L, and
- EO-BF% $\geq$ 10%.

In the above described embodiment, in the step S13, the operator is allowed to input a collection source of the sample when the collection source is missing in the measurement order received from the LIS 201. In another embodiment, the step S13 may be omitted from the procedure of WAM 202. In this another embodiment, even if the collection source of the sample is missing in the measurement order received from the LIS 201, the WAM 202 can perform the validation of the test results of the sample based on the validation rules corresponding to the other fluid. In this case, the WAM 202 notifies the operator that the collection source was missing in the measurement order via the display screen of Fig. 10. When the operator realizes that the collection source of the sample should be CSF and the test results should be validated based on the CSF rules, the operator can input the correct collection source by using the selection screen of Fig. 12A and conduct a re-measurement of the sample (or re-transmit the results from the analyzer) to obtain a correct validation result based on the validation rules corresponding to the correct collection source.

**Claims**

1.  A computer-implemented method for performing a validation of a test result from an analyzing instrument, comprising the steps of:

    receiving (S12) information related to a collection source of a body fluid sample collected from a body cavity;
    determining (S191), based on the received information, whether the body fluid sample corresponds to a first group including at least one specific type of body fluid, or a second group including at least a plurality of types of body fluids other than the specific type of body fluid;
    obtaining (S18) a test result of the body fluid sample from the analyzing instrument; and
    validating (S192) the obtained test result based on a first validation rule when the body fluid sample corresponds to the first group, and validating (S193) the obtained test result based on a second validation rule different from the first validation rule when the body fluid sample corresponds to the second group.

2.  The method according to claim 1, wherein
    the specific type of body fluid is a cerebrospinal fluid (CSF).

3.  The method according to claim 1 or 2, wherein
    the second group includes at least two of synovial fluid, pleural fluid, ascitic fluid and CAPD fluid.

4.  The method according to any one of the claims 1 to 3, wherein
    the step of receiving (S12) the information related to the collection source is performed by a step of receiving a measurement order for a body fluid sample, and
    the step of determining comprises a step of determining that the body fluid sample corresponds to the second group, when the measurement order does not include the information related to the collection source.

5.  The method according to one of the claims 1 to 4, wherein
    each of the first validation rule and the second validation rule includes at least one of or only

    determining whether or not a white blood cell scattergram is abnormal, and
    determining whether or not the number of highly fluorescent cells in the body fluid sample is above a threshold, the threshold being different between the first validation rule and the second validation rule.

6.  The method according to claim 4, further comprising

    receiving (S13), from an operator, a modification of the collection source of the body fluid sample, wherein
    the step of validating (S19) the obtained test result is performed based on the modified collection source.

7.  The method according to one of claims 1 to 3, further comprising

    displaying a selection screen including a first item corresponding to the first group and a second item corresponding to the second group, wherein
    the step of receiving the information related to the collection source is performed by the selection by a user on the selection screen.

8.  The method according to any one of claims 1 to 7, wherein

    the method is performed by a computer which is connected to a plurality of analyzing instruments, and
    the validated test result is released to a laboratory information system.

9.  The method according to claim 8, further comprising
    receiving (S23) an instruction from the operator to release the validated test result.

10. The method according to any one of claims 1 to 9, further comprising
    receiving (S28), via a screen, a result of macroscopic examination on the body fluid sample, wherein the macroscopic examination comprises at least one of colour, clarity, clot formation and viscosity of the body fluid sample.

11. The method according to claim 10, further comprising

displaying the obtained test result on the same screen where the result of the macroscopic examination is received.

12. The method according to any one of claims 1 to 11, wherein

the test result of the body fluid sample obtained from the analyzing instrument includes a plurality of counting results which are obtained by counting different types of cells in the body fluid sample, wherein the method further comprises
calculating a relative value of a number of cells contained in each subpopulation of white blood cells to a number of total nucleated cells in the body fluid sample; and
releasing the test result together with the calculated relative value.

13. A device for performing a validation of a test result from an analyzing instrument, wherein the device is configured to perform the steps of any one of claims 1 to 12.

14. A computer-readable storage medium comprising a computer program adapted to perform the method according to any one of claims 1 to 12.

15. A test system, comprising:

an analyzing instrument configured to test a sample collected from a body cavity of a subject; and
a device according to claim 13.

**Patentansprüche**

1. Computerimplementiertes Verfahren zum Durchführen einer Validierung eines Testergebnisses von einem Analyseinstrument, umfassend die folgenden Schritte:

Empfangen (S12) von Informationen bezüglich einer Entnahmequelle einer Körperflüssigkeitsprobe, die einer Körperhöhle entnommen wurde;
Bestimmen (S191), basierend auf den empfangenen Informationen, ob die Körperflüssigkeitsprobe einer ersten Gruppe, die zumindest eine bestimmte Art von Körperflüssigkeit beinhaltet, oder einer zweiten Gruppe entspricht, die zumindest eine Vielzahl von anderen Arten von Körperflüssigkeiten als der bestimmten Art von Körperflüssigkeit beinhaltet;
Erhalten (S18) eines Testergebnisses der Körperflüssigkeitsprobe von dem Analyseinstrument; und
Validieren (S192) des erhaltenen Testergebnisses basierend auf einer ersten Validierungsregel, wenn die Körperflüssigkeitsprobe der ersten Gruppe entspricht, und Validieren (S193) des erhaltenen Testergebnisses basierend auf einer zweiten Validierungsregel, die sich von der ersten Validierungsregel unterscheidet, wenn die Körperflüssigkeitsprobe der zweiten Gruppe entspricht.

2. Verfahren nach Anspruch 1, wobei
die bestimmte Art von Körperflüssigkeit eine Rückenmarksflüssigkeit (CSF) ist.

3. Verfahren nach Anspruch 1 oder 2, wobei
die zweite Gruppe zumindest zwei von Synovialflüssigkeit, Pleuraflüssigkeit, Aszitesflüssigkeit und CAPD-Flüssigkeit beinhaltet.

4. Verfahren nach einem der Ansprüche 1 bis 3, wobei

der Schritt zum Empfangen (S12) der Informationen bezüglich der Entnahmequelle durch einen Schritt zum Empfangen einer Messungsreihenfolge für eine Körperflüssigkeitsprobe durchgeführt wird, und
der Schritt zum Bestimmen einen Schritt zum Bestimmen umfasst, dass die Körperflüssigkeitsprobe der zweiten Gruppe entspricht, wenn die Messungsreihenfolge die Informationen bezüglich der Entnahmequelle nicht beinhaltet.

5. Verfahren nach einem der Ansprüche 1 bis 4, wobei
sowohl die erste Validierungsregel als auch die zweite Validierungsregel zumindest eines des Folgenden oder nur dieses beinhaltet

Bestimmen, ob ein Streuungsdiagramm weißer Blutkörperchen abnormal ist oder nicht, und
Bestimmen, ob die Anzahl von hoch fluoreszenten Zellen in der Körperflüssigkeitsprobe über einem Schwellenwert liegt oder nicht, wobei sich der Schwellenwert zwischen der ersten Validierungsregel und der zweiten Validierungsregel unterscheidet.

6. Verfahren nach Anspruch 4, weiter umfassend

Empfangen (S13), von einem Operator, einer Modifikation der Entnahmequelle der Körperflüssigkeitsprobe, wobei
der Schritt zum Validieren (S19) des erhaltenen Testergebnisses basierend auf der modifizierten Entnahmequelle durchgeführt wird.

7. Verfahren nach einem der Ansprüche 1 bis 3, weiter umfassend

Anzeigen eines Auswahlbildschirms, der ein erstes Element entsprechend der ersten Gruppe und ein zweites Element entsprechend der zweiten Gruppe beinhaltet, wobei
der Schritt zum Empfangen der Informationen bezüglich der Entnahmequelle durch die Auswahl durch einen Benutzer auf dem Auswahlbildschirm durchgeführt wird.

8. Verfahren nach einem der Ansprüche 1 bis 7, wobei

das Verfahren durch einen Computer durchgeführt wird, der mit einer Vielzahl von Analyseinstrumenten verbunden ist, und
das validierte Testergebnis für ein Laborinformationssystem freigegeben wird.

9. Verfahren nach Anspruch 8, weiter umfassend
Empfangen (S23) einer Anweisung von dem Operator, das validierte Testergebnis freizugeben.

10. Verfahren nach einem der Ansprüche 1 bis 9, weiter umfassend
Empfangen (S28), über einen Bildschirm, eines Ergebnisses einer makroskopischen Untersuchung der Körperflüssigkeitsprobe, wobei die makroskopische Untersuchung zumindest eines von Farbe, Klarheit, Gerinnselbildung und Viskosität der Körperflüssigkeitsprobe umfasst.

11. Verfahren nach Anspruch 10, weiter umfassend
Anzeigen des erhaltenen Testergebnisses auf demselben Bildschirm, wo das Ergebnis der makroskopischen Untersuchung empfangen wird.

12. Verfahren nach einem der Ansprüche 1 bis 11, wobei

das Testergebnis der Körperflüssigkeitsprobe, das von dem Analyseinstrument erhalten wird, eine Vielzahl von Zählungsergebnissen beinhaltet, die erhalten werden, indem unterschiedliche Zellarten in der Körperflüssigkeitsprobe gezählt werden, wobei das Verfahren weiter Folgendes umfasst
Berechnen eines relativen Werts einer Anzahl von Zellen, die in jeder Subpopulation weißer Blutzellen enthalten sind, zu einer Anzahl von gesamten kernhaltigen Zellen in der Körperflüssigkeitsprobe; und Freigeben des Testergebnisses gemeinsam mit dem berechneten relativen Wert.

13. Vorrichtung zum Durchführen einer Validierung eines Testergebnisses von einem Analyseinstrument, wobei die Vorrichtung dazu ausgelegt ist, die Schritte nach einem der Ansprüche 1 bis 12 durchzuführen.

14. Computerlesbares Speichermedium, das ein Computerprogramm umfasst, das dazu angepasst ist, das Verfahren nach einem der Ansprüche 1 bis 12 durchzuführen.

15. Testsystem, umfassend:

ein Analyseinstrument, das dazu ausgelegt ist, eine Probe zu testen, die einer Körperhöhle eines Subjekts entnommen wird; und
eine Vorrichtung nach Anspruch 13.

**Revendications**

1. Procédé mis en oeuvre par ordinateur pour effectuer une validation d'un résultat de test à partir d'un instrument d'analyse, comprenant les étapes consistant à :

   recevoir (S12) des informations relatives à une source de collecte d'un échantillon de fluide corporel prélevé à partir d'une cavité corporelle ;
   déterminer (S191), sur la base des informations reçues, si l'échantillon de fluide corporel correspond à un premier groupe incluant au moins un type spécifique de fluide corporel, ou à un second groupe incluant au moins une pluralité de types de fluides corporels autres que le type spécifique de fluide corporel ;
   obtenir (S18) un résultat de test de l'échantillon de fluide corporel à partir de l'instrument d'analyse ; et
   valider (S192) le résultat de test obtenu sur la base d'une première règle de validation quand l'échantillon de fluide corporel correspond au premier groupe, et valider (S193) le résultat de test obtenu sur la base d'une seconde règle de validation différente de la première règle de validation quand l'échantillon de fluide corporel correspond au second groupe.

2. Procédé selon la revendication 1, dans lequel
   le type spécifique de fluide corporel est un liquide céphalorachidien (LCR).

3. Procédé selon la revendication 1 ou 2, dans lequel
   le second groupe inclut au moins deux parmi un liquide synovial, un liquide pleural, un liquide d'ascite et un liquide CAPD.

4. Procédé selon l'une quelconque des revendications 1 à 3, dans lequel

   l'étape de réception (S12) des informations relatives à la source de collecte est effectuée par une étape de réception d'un ordre de mesure pour un échantillon de fluide corporel, et
   l'étape de détermination comprend une étape consistant à déterminer que l'échantillon de fluide corporel correspond au second groupe, quand l'ordre de mesure n'inclut pas les informations relatives à la source de collecte.

5. Procédé selon l'une des revendications 1 à 4, dans lequel
   chacune parmi la première règle de validation et la seconde règle de validation inclut au moins l'une parmi ou uniquement

   la détermination qu'un diagramme de dispersion de leucocytes est anormal ou non, et
   la détermination que le nombre de cellules hautement fluorescentes dans l'échantillon de fluide corporel est ou non au-dessus d'un seuil, le seuil étant différent entre la première règle de validation et la seconde règle de validation.

6. Procédé selon la revendication 4, comprenant en outre

   la réception (S13), en provenance d'un opérateur, d'une modification de la source de collecte de l'échantillon de fluide corporel, dans lequel
   l'étape de validation (S19) du résultat de test obtenu est effectuée sur la base de la source de collecte modifiée.

7. Procédé selon l'une des revendications 1 à 3, comprenant en outre

   l'affichage d'un écran de sélection incluant un premier élément correspondant au premier groupe et un second élément correspondant au second groupe, dans lequel
   l'étape de réception des informations relatives à la source de collecte est effectuée par la sélection par un utilisateur sur l'écran de sélection.

8. Procédé selon l'une quelconque des revendications 1 à 7, dans lequel

   le procédé est mis en oeuvre par un ordinateur qui est connecté à une pluralité d'instruments d'analyse, et
   le résultat de test validé est communiqué à un système d'informations de laboratoire.

9. Procédé selon la revendication 8, comprenant en outre

la réception (S23) d'une instruction provenant de l'opérateur pour communiquer le résultat de test validé.

10. Procédé selon l'une quelconque des revendications 1 à 9, comprenant en outre
la réception (S28), via un écran, d'un résultat d'examen macroscopique sur l'échantillon de fluide corporel, dans lequel l'examen macroscopique comprend au moins l'un parmi la couleur, la limpidité, la formation de caillots et la viscosité de l'échantillon de fluide corporel.

11. Procédé selon la revendication 10, comprenant en outre
l'affichage du résultat de test obtenu sur le même écran où le résultat de l'examen macroscopique est reçu.

12. Procédé selon l'une quelconque des revendications 1 à 11, dans lequel

le résultat de test de l'échantillon de fluide corporel obtenu à partir de l'instrument d'analyse inclut une pluralité de résultats de comptage qui sont obtenus en comptant différents types de cellules dans l'échantillon de fluide corporel, dans lequel le procédé comprend en outre
le calcul d'une valeur relative d'un nombre de cellules contenues dans chaque sous-population de leucocytes par rapport à un nombre de cellules nucléées totales dans l'échantillon de fluide corporel ; et la communication du résultat de test conjointement avec la valeur relative calculée.

13. Dispositif pour effectuer une validation d'un résultat de test provenant d'un instrument d'analyse, dans lequel le dispositif est configuré pour mettre en oeuvre les étapes selon l'une quelconque des revendications 1 à 12.

14. Support de stockage lisible par ordinateur comprenant un programme informatique adapté pour mettre en oeuvre le procédé selon l'une quelconque des revendications 1 à 12.

15. Système de test, comprenant :

un instrument d'analyse configuré pour tester un échantillon prélevé à partir d'une cavité corporelle d'un sujet ; et
un dispositif selon la revendication 13.

Fig. 1

Fig. 2

Fig. 3A

Fig. 3B

Fig. 3C

Fig.  4

Fig. 5

```
                    ┌─────────────┐
                    │    Start    │
                    └──────┬──────┘
                           │
        ┌──────────────────▼──────────────────┐
   NO   ◇         Query of sample              ◇  ─ S10
   ◄────◇        measurement from             ◇
        ◇           analyzer?                 ◇
        └──────────────────┬──────────────────┘
                           │ YES
        ┌──────────────────▼──────────────────┐
        │          Query order to LIS         │  ─ S11
        └──────────────────┬──────────────────┘
                           │
        ┌──────────────────▼──────────────────┐
   NO   ◇      Receive order for body fluid    ◇  ─ S12
   ◄────◇       measurement from LIS?         ◇
        └──────────────────┬──────────────────┘
                           │ YES
        ┌──────────────────▼──────────────────┐
        │  Operator adds/modifies collection   │  ─ S13
        │              source                  │
        └──────────────────┬──────────────────┘
                           │
        ┌──────────────────▼──────────────────┐
        ◇        Collection source is          ◇  ─ S14      NO
        ◇         included in order?          ◇ ─────────────────┐
        └──────────────────┬──────────────────┘                 │
                           │ YES                                 │
        ┌──────────────────▼──────────┐        ┌────────────────▼─────┐
        │ Determine type of sample     │ ─ S15  │  Determine type of   │ ─ S16
        │ according to received        │        │  sample to be 'other'│
        │ collection source            │        └───────────┬──────────┘
        └──────────────────┬──────────┘                     │
                           │◄─────────────────────────────────┘
                           │
                       ┌───▼───┐
                       │   A   │
                       └───────┘
```

Fig. 6

Fig. 7

Fig. 8

**WBC scattergram**

Fig. 9A

**Abnormal WBC scattergram**

Unclear boundaries between the mononuclear and polymorphonuclear cell clusters

Unclear boundaries between the debris and white blood cell clusters

Fig. 9B

Fig. 10

| CLARITY | COLOUR | CLOT | VISCOSITY |
|---|---|---|---|
| Clear | Colourless | Firm | High |
| Cloudy | Yellow | Friable | Low |
| Opalescent | Orange | Good | Decreased |
| Opaque | Pink | Fair | Normal |
| Translucent | Brown | Poor | |
| | Straw-coloured | | |
| | Red | | |
| | Green | | |
| | White | | |
| | Black | | |
| | Pale yellow | | |
| | Yellow-white | | |
| | Yellow-green | | |

Fig. 11

Fig. 12A

| Test | Result |
|------|--------|
| Body Fluid Count | |
| RBC-BF | 39 |
| WBC-BF | 9,586 |
| TC-BF# | 9,731 |
| BF macroscopic examination | |
| BF clarity | - Please s...    ▾ ✕ ⟶ 100 |
| BF colour | |
| BF clot | |
| BF viscosity | |

Value
- Please select
Clear
Cloudy
Opalescent
Translucent
Opaque

Fig. 12B

**Modify Orders**  ✕

➕ Add Orders   Modify Orders   🔍 View Orders   View Not Accepted Orders   Reactivate Closed

| Lab Customer | Sysmex_LabCustomer  ▾ | | Clinic | Emergency  ▾ ✕ |
| Sample Number | 1234 | | Priority | Stat  ▾ ✕ |
| Collection Source | Cerebrospinal fluid  ▾ ✕ | | Collection Date | 16/01/2019 00:00  ▾ |

| Code ▲ | Description |
|--------|-------------|
| CAPD | CAPD |
| CSF | Cerebrospinal fluid |
| OTHER | Other body fluids |

Fig. 12C

M1

M2

| | | WBC-BF based | TC-BF# based | |
|---|---|---|---|---|
| WBC-BF(/uL) | 883 | 883 | | |
| TC-BF#(/uL) | 1004 | | | 1004 |
| **Standard DIFF** | | | | |
| MN#(/uL) | 640 | 640 | | 640 |
| PMN#(/uL) | 243 | 243 | | 243 |
| [HF-BF#(/uL)] | 121 | | | 121 |
| | | 883 | | 1004 |
| MN%(%) | 72.4 | 72.4 | TC-MN%(%) | 63.7 |
| PMN%(%) | 27.6 | 27.6 | TC-PMN%(%) | 24.2 |
| [HF-BF%(/100WBC)] | 13.7 | | TC-[HF-BF%(%)] | 12.1 |
| | | 100 | | 100 |
| **4-DIFF** | | | | |
| [NE-BF#(/uL)] | 217 | 217 | | 217 |
| [LY-BF#(/uL)] | 396 | 396 | | 396 |
| [MO-BF#(/uL)] | 244 | 244 | | 244 |
| [EO-BF#(/uL)] | 26 | 26 | | 26 |
| [HF-BF#(/uL)] | 121 | | | 121 |
| | | 883 | | 1004 |
| [NE-BF%(%)] | 24.7 | 24.7 | [TC-NE-BF%(%)] | 21.6 |
| [LY-BF%(%)] | 44.8 | 44.8 | [TC-LY-BF%(%)] | 39.4 |
| [MO-BF%(%)] | 27.6 | 27.6 | [TC-MO-BF%(%)] | 24.3 |
| [EO-BF%(%)] | 2.9 | 2.9 | [TC-EO-BF%(%)] | 2.6 |
| [HF-BF%(/100WBC)] | 13.7 | | [TC-HF-BF%(%)] | 12.1 |
| | | 100 | | 100 |

M3

M4

Fig. 13

**EP 3 767 298 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2118794 B1
- EP 3422014 A1
- EP 3153841 A1
- EP 1953527 A2